**Europäisches Patentamt**

**European Patent Office**

**Office européen des brevets**

(19)

(11) Veröffentlichungsnummer: **0 311 857 B1**

## (12) EUROPÄISCHE PATENTSCHRIFT

(45) Veröffentlichungstag der Patentschrift: **01.04.92**

(51) Int. Cl.⁵: **B23Q 3/157**

(21) Anmeldenummer: **88116198.8**

(22) Anmeldetag: **30.09.88**

(54) **Werkzeughalter für eine Werkzeugmaschine.**

(30) Priorität: **14.10.87 DE 3734718**

(43) Veröffentlichungstag der Anmeldung:
**19.04.89 Patentblatt 89/16**

(45) Bekanntmachung des Hinweises auf die
Patenterteilung:
**01.04.92 Patentblatt 92/14**

(84) Benannte Vertragsstaaten:
**CH DE ES FR GB IT LI SE**

(56) Entgegenhaltungen:
**EP-A- 0 151 219**
**DE-A- 2 647 633**
**FR-A- 2 496 532**

**PATENT ABSTRACTS OF JAPAN Band
8,Nr.197 (m-324)(1634),11.September 1984;&
JP-A 59 88236 (ENSHIYUU SEISAKU)
22.05.1984**

(73) Patentinhaber: **Chiron-Werke GmbH & Co. KG
Talstrasse 33
W-7200 Tuttlingen(DE)**

(72) Erfinder: **Winkler, Hans-Henning, Dr.
Brunnentalstrasse 88
W-7200 Tuttlingen(DE)**
Erfinder: **Rütschle, Eugen
Schönenbergstrasse 20
W-7202 Mühlheim(DE)**

(74) Vertreter: **Witte, Alexander, Dr.-Ing.
Witte, Weller & Gahlert Patent- und Rechtsanwälte Augustenstrasse 7
W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Werkzeugwechsler mit einem Werkzeughalter und einem Greifer für eine Werkzeugmaschine, bei der eine Mehrzahl von genormten Werkzeughaltern, insbesondere Steilkegel-Werkzeughaltern, mittels Greifern aus einem Werkzeugmagazin entnehmbar und in eine Spindel eines Spindelstocks einführbar ist, wobei der Werkzeughalter einen Ringflansch mit einer sich nach unten verjüngenden Außenkonusfläche aufweist und der Greifer mit einem ringförmigen Teil versehbar ist, das eine sich nach oben erweiternde Innenkonusfläche aufweist und die Flächen beim Einführen des Werkzeughalters in die Spindel mit dem Eigengewicht des Werkzeughalters unter Reibschluß aneinanderliegen, während im eingezogenen Zustand des Werkzeugwechslers in der Spindel die Flächen voneinander abgehoben sind.

Ein Werkzeugwechsler der vorstehend genannten Art ist aus dem Dokument DE-U-85 02 937.8 bekannt.

Der bekannte Werkzeugwechsler ist Teil einer Werkzeugmaschine, bei der Haltearme zum Ergreifen und Transportieren der Werkzeughalter vorgesehen sind. Jeder Haltearm ist mit einem Durchgangsloch zur Aufnahme eines Werkzeughalters versehen. Das Durchgangsloch ist als Stufenbohrung ausgebildet und in einen Abschnitt der Stufenbohrung mit vergrößertem Durchmesser ist ein Kunststoff-Haltering fest eingesetzt. Der Haltering ist zur Achse des Durchgangsloch hin mit einer sich nach unten verjüngenden konischen Oberfläche versehen. Diese konische Oberfläche dient als Auflagefläche für den Werkzeughalter, der mit einer komplementären Außenkonusfläche auf diese Auflagefläche aufsetzbar ist.

Aus dem Dokument EP-A-0 151 219 ist ein weiterer Werkzeugwechsler für eine Werkzeugmaschine bekannt, der einen Werkzeughalter aufweist, in dessen Ringflansch ein sogenanntes Bremslager eingebaut ist. Dieses Bremslager besteht aus einem inneren, mit dem Ringflansch des Werkzeughalters fest verbundenen Ringteil und einem äußeren, gegenüber dem inneren Ringteil leicht verdrehbaren Ringteil, an dem der Werkzeughalter mittels des Greifers gehalten werden und gehalten bleiben kann, wenn der Werkzeughalter sich während der Arbeit des Werkzeug mit der Spindel dreht. Während des Einführens des Werkzeughalters in die Spindel liegt das innere Ringteil unter Reibschluß auf einer entsprechenden Gegenfläche des Greifers auf. Hierdurch wird der Werkzeughalter gegenüber der rotierenden Spindel abgebremst mit der Folge, daß ein in der Spindel angeordneter Nutenstein an einer radialen Ringfläche des Ringflansches des Werkzeughalters entlanggleiten kann, ohne diesen mitzunehmen, um in dieser Weise auf kürzestem Wege die zugehörige Nut zu finden, damit ein Formschluß zwischen rotierender Spindel und Werkzeughalter hergestellt werden kann. Wenn dann der Werkzeughalter in die Spindel eingezogen ist, werden die unter Reibschluß aneinanderliegenden Flächen voneinander abgehoben, und der Werkzeughalter kann sich, ohne vom Greifer gebremst zu werden, frei drehen.

Der bekannte Werkzeughalter erfordert im Bereich seines Ringflansches die zuvor geschilderten Einbauten mit einem Kugellager und den genannten Ringteilen, so daß insgesamt mit dem sogenannten Bremslager ein Ringflansch entsteht, dessen Abmessungen größer sind als die von Ringflanschen genormter Werkzeughalter, beispielsweise genormter Steilkegel-30 oder Steilkegel-40-Werkzeughalter.

Aus dem Dokument DE-A-33 20 874 ist eine Werkzeugmaschine bekannt, bei der ebenfalls Werkzeughalter drehbar in Greifern gehalten sind. Die Greifer sind dabei mit zwei zur Werkzeughalterachse radial verlaufenden, axial voneinander beabstandeten Halteteilen versehen, die eine Durchgangsbohrung aufweisen, um den Ringflansch des Werkzeughalters zwischen sich einzuschließen. Im seitlichen Bereich sind die Halteteile aufklappbar ausgebildet, um den Werkzeughalter seitlich zwischen die Halteteile einsetzen zu können.

Aus dem Dokument GB-A-426 132 sind ringartige Elemente bekannt, die auf den Schaft eines Bohrers aufgesetzt werden können und eine farbliche oder alphanumerische Markierung tragen, um den Bohrer hinsichtlich seiner Eigenschaften, beispielsweise seines Durchmessers, zu identifizieren.

Der Erfindung liegt daher die Aufgabe zugrunde, einen Werkzeugwechsler der eingangs genannten Art dahingehend weiterzubilden, daß auch genormte Werkzeughalter, insbesondere Steilkegel-Werkzeughalter, in einer Werkzeugmaschine eingesetzt werden können, deren Greifer für Bremslager-Werkzeughalter gemäß Dokument EP-A-0 151 219 eingerichtet sind.

Diese Aufgabe wird bei einem Werkzeugwechsler der eingangs genannten Art erfindungsgemäß dadurch gelöst, daß das ringförmige Teil als loses Einsatzteil ausgebildet ist, daß der Greifer bei nicht-eingesetztem Einsatzteil zur Aufnahme von Werkzeughaltern mit größeren Ringflanschabmessungen ausgebildet ist, und daß das Einsatzteil als Adapter an Werkzeughalter mit kleineren Ringflanschabmessungen anlegbar und mit diesen in den Greifer einsetzbar ist.

Die der Erfindung zugrundeliegende Aufgabe wird auf diese Weise vollkommen gelöst, weil mit Hilfe des Einsatzteils eine Anpassung der kleineren Normabmessungen des Ringflansches an die größeren Abmessungen des Bremslager-Ringflansches gelingt. Das Einsatzteil kann dabei als billiges Kunststoffteil ausgeführt werden, weil das Einsatzteil keinen nennenswerten mechanischen Belastungen ausgesetzt ist.

Bei Werkzeugmaschinen der hier interessierenden Art werden die Werkzeughalter üblicherweise mittels verschwenkbaren Greifarmen, die an ihren freien Enden mit Greifern versehen sind, aus Aufnahmen des Werkzeugmagazins entnommen und in die Spindel des Spindelstocks überführt bzw. nach erfolgtem Einsatz auf demselben Wege wieder in das Magazin zurückverbracht.

Man könnte daher die Einsatzteile an den Greifern der Greifarme sowie an den entsprechenden Einsätzen des Werkzeugmagazins anbringen, bevorzugt ist jedoch im Rahmen der vorliegenden Erfindung, wenn die Einsatzteile an den genormten Werkzeughaltern angebracht werden, damit keine Umrüstarbeiten an der Werkzeugmaschine erforderlich sind und genormte Werkzeughalter in beliebiger Weise mit Bremshalter-Werkzeughaltern kombiniert werden können.

Bei einer bevorzugten Ausgestaltung der Erfindung ist hierzu vorgesehen, daß das Einsatzteil aus zwei im wesentlichen halbkreisförmigen Hälften besteht, die an einem Ende miteinander schwenkbar verbunden sind und am anderen Ende lösbare Verbindungsmittel aufweisen.

Diese Maßnahme hat den Vorteil, daß das Einsatzteil in einfacher Weise um den Ringflansch eines genormten Werkzeughalters herumgelegt werden kann, so daß der Werkzeughalter mit wenigen Handgriffen im Bereich seines Ringflansches Außenabmessungen erhält, die ihn kompatibel mit Greifern und Magazinplätzen von Bremslager-Werkzeughaltern machen.

Bei einer bevorzugten Weiterbildung dieser Variante sind die Verbindungsmittel als elastische Rastverbindung ausgebildet, bei der eine am einen Ende einer der Hälften angeordnete Rastnase im verrasteten Zustand hinter einen am einen Ende der anderen Hälfte angeordneten Rastvorsprung faßt.

Diese Maßnahme hat den Vorteil, daß die Umrüstung genormter Werkzeughalter mit Einsatzteilen besonders einfach vonstatten geht, weil nur, wie bereits erwähnt, die beiden Hälften des Einsatzteils um den genormten Ringflansch herumgelegt und dann durch Zusammendrücken verrastet werden müssen.

Weiterhin ist bei dieser Variante bevorzugt, wenn ein freies Ende der Rastnase im verrasteten Zustand mit seitlichem Abstand zum Rastvorsprung angeordnet ist.

Diese Maßnahme hat den Vorteil, daß das Einsatzteil ohne Zurhilfenahme von Werkzeug wieder vom genormten Werkzeughalter entfernt werden kann, indem der Benutzer mit dem Finger in den Zwischenraum zwischen Rastnasenende und Rastvorsprung greift und die Rastverbindung durch Auseinanderbiegen der Hälften des Einsatzteils wieder löst.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:

Fig. 1     eine Seitenansicht, teilweise abgebrochen und aufgebrochen, eines Werkzeughalters nach der Erfindung,

Fig. 2     ein Einsatzteil zur Verwendung mit einem Werkzeughalter gemäß Fig. 1, im aufgeklappten Zustand und ebenfalls teilweise aufgebrochen.

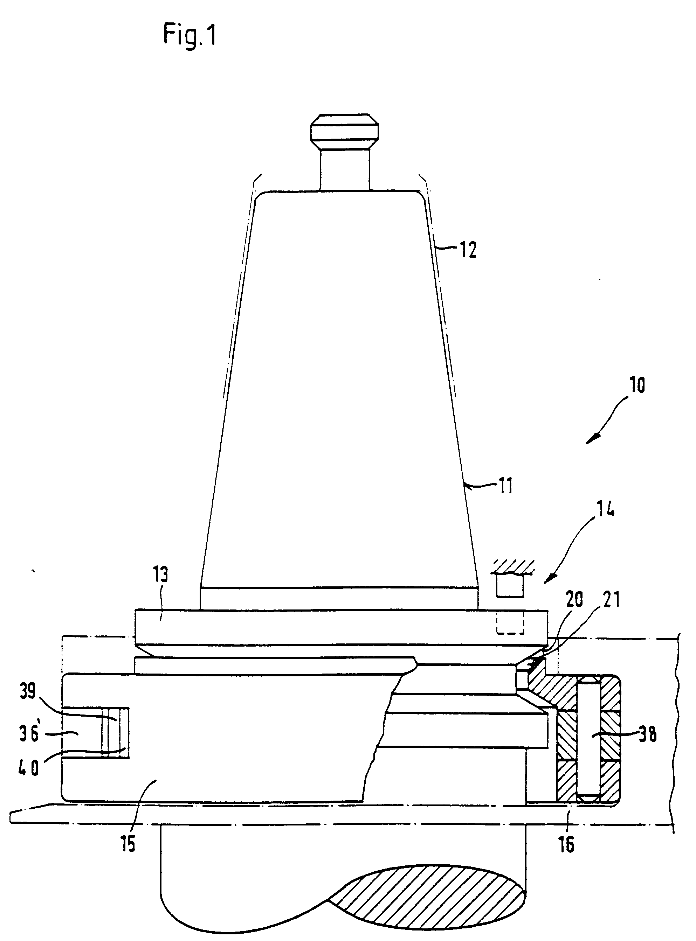

In Fig. 1 bezeichnet 10 einen Werkzeughalter von genormter Bauart mit einem Steilkegel 11, der z.B. als Steilkegel-30 oder Steilkegel-40 ausgebildet sein kann.

Der Werkzeughalter 10 ist mit dem Steilkegel 11 in eine nur schematisch angedeutete Spindel 12 einer Werkzeugmaschine einspannbar, wie dies an sich bekannt ist. Zum Einspannen des Werkzeughalters 10 wird dieser zunächst lose in die Spindel eingesetzt und dann unter der Wirkung geeigneter Spannmittel der Spindel axial in diese hereingezogen, so daß der Steilkegel 11 in Anlage an eine komplementäre Spindelaufnahme der Spindel 12 gelangt.

Mit 13 ist ein Ringflansch des Werkzeughalters 10 bezeichnet, und bei 14 ist angedeutet, daß üblicherweise ein Nutenstein der Spindel 12 in eine zugehörige Nut des Ringflanschs 13 in einer radialen Ringfläche faßt, damit auch in Drehrichtung ein Formschluß zwischen Werkzeughalter 10 und Spindel 12 hergestellt wird.

Es ist bekannt, beim "Suchlauf" des Werkzeughalters 10, bis der Nutenstein in die Nut einfällt, den Werkzeughalter 10 gegenüber der rotierenden Spindel 12 abzubremsen, damit der Nutenstein nicht auf einem durchgehenden Punkt der Ringfläche des Ringflansches 13 aufsitzt und diesen mitdreht, ohne je in die zugehörige Nut zu gelangen.

Im Rahmen der vorliegenden Erfindung ist hierzu ein Einsatzteil 15 vorgesehen, das den Ringflansch 13 allseits umgibt und seinerseits vorzugsweise formschlüssig in einen Greifer 16 der Werkzeugmaschine paßt. Das Einsatzteil 15 ist mit seinen Außenabmessungen so gestaltet, daß die Außenkontur des Ringflansches 13 mit Einsatzteil 15 der Außenkontur eines sogenannten Bremslager-Werkzeughalters entspricht, wie er in der EP-B 0 151 219 beschrieben ist. Der Greifer 16 ist mit seinen Aufnahmedimensionen für Werkzeughalter dieser Bauart eingerichtet. Dies bedeutet, daß ein mit einem Einsatzteil 15 versehener, genormter Werkzeughalter 10 bei solchen Werkzeugmaschinen einsetzbar ist, deren Greifer 16 für Bremslager-Werkzeughalter eingerichtet ist.

Der Ringflansch 13 des Werkzeughalters 10 ist in seinem oberen Bereich mit einer sich nach unten verjüngenden Außenkonusfläche 20 versehen, der eine vorzugsweise parallele und sich nach oben öffnende Innenkonusfläche 21 am Einsatzteil 15 gegenübersteht.

Fig. 1 zeigt den Fall, daß der Werkzeughalter 10 in die Spindel 12 bereits eingezogen wurde. Die Außenkonusfläche 20 ist in diesem Zustand von der Innenkonusfläche 21 abgehoben, so daß sich der Werkzeughalter 10 frei im Einsatzteil 15 drehen kann, dessen Innenkontur im übrigen ebenfalls größere Durchmesser aufweist als der Ringflansch 13. Beim Einführen des Werkzeughalters 10 in die Spindel 12 liegt hingegen die Außenkonusfläche 20 auf der Innenkonusfläche 21 des Einsatzteils 15 auf, wobei aufgrund des Eigengewichts des Werkzeughalters 10 ein Reibschluß zwischen den Flächen 20 und 21 entsteht. Dieser Reibschluß kann in an sich bekannter Weise durch Aufrauhen der Flächen 20, 21 noch gesteigert werden. Auf diese Weise wird der Werkzeughalter 10 beim Einführen in die Spindel 12 gegen Drehbewegungen abgebremst, und der Nutenstein wird auf der ringförmigen Oberfläche des Ringflansches 13 entlanggleiten bis er die zugehörige Nut gefunden hat.

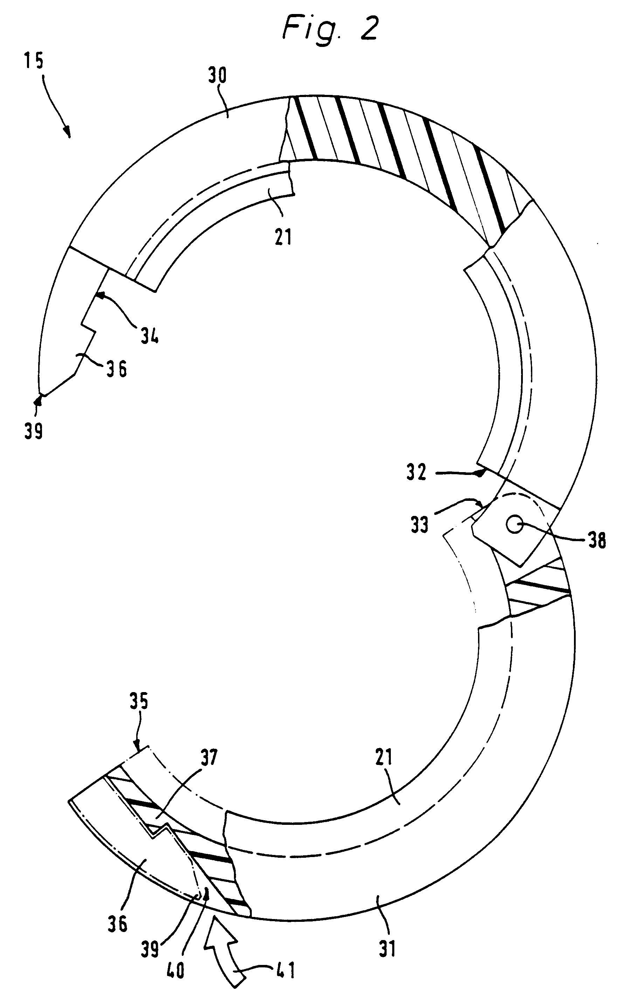

Aus Fig. 2 ist zu erkennen, daß das Einsatzteil 15 in halbschaliger Bauweise mit einer ersten Hälfte 30 und einer zweiten Hälfte 31 ausgebildet ist. Ein erstes Ende 31 der ersten Hälfte 30 ist mit einem zweiten Ende 33 der zweiten Hälfte 31 schwenkbar verbunden, während ein drittes Ende 34 der ersten Hälfte 30 mit einem vierten Ende 35 der zweiten Hälfte 31 über lösbare Verbindungsmittel verbindbar ist.

Die lösbaren Verbindungsmittel sind als Rastnase 36 am dritten Ende 34 und als Rastvorsprung 37 am vierten Ende 35 ausgebildet. Die schwenkbare Verbindung am ersten Ende 32 und zweiten Ende 33 wird hingegen durch einen axialen Stift 38 gebildet.

In der unteren Hälfte von Fig. 2 ist strichpunktiert eingezeichnet, daß im verrasteten Zustand die Rastnase 36 elastisch hinter den Rastvorsprung 37 faßt. Ein vorderes freies Ende 39 der Rastnase 36 ist verjüngt ausgebildet, so daß im verrasteten Zustand ein Abstand 40 zwischen dem freien Ende 39 und dem Rastvorsprung 37 verbleibt. Der Benutzer des Einsatzteils 15 kann daher mit dem Finger in Richtung eines Pfeils 41 in den Zwischenraum zwischen freiem Ende 39 und Rastvorsprung 37 fassen und die elastische Rastverbindung durch Zurückbiegen der Rastnase 36 wieder lösen.

Die Hälften 30, 31 des Einsatzteils 15 sind bevorzugt als gespritzte Kunststoffteile ausgebildet.

**Patentansprüche**

1. Werkzeugwechsler mit einem Werkzeughalter und einem Greifer für eine Werkzeugmaschine, bei der eine Mehrzahl von genormten Werkzeughaltern (10), insbesondere Steilkegel-Werkzeughaltern, mittels Greifern (16) aus einem Werkzeugmagazin entnehmbar und in eine Spindel (12) eines Spindelstocks einführbar ist, wobei der Werkzeughalter (10) einen Ringflansch (13) mit einer sich nach unten verjüngenden Außenkonusfläche (20) aufweist und der Greifer (16) mit einem ringförmigen Teil versehen ist, das eine sich nach oben erweiternde Innenkonusfläche (21) aufweist und die Flächen (20, 21) beim Einführen des Werkzeughalters (10) in die Spindel (12) mit dem Eigengewicht des Werkzeughalters (10) unter Reibschluß aneinanderliegen, während im eingezogenen Zustand des Werkzeughalters (10) in der Spindel (12) die Flächen (20, 21) voneinander abgehoben sind, dadurch gekennzeichnet, daß das ringförmige Teil als loses Einsatzteil (15) ausgebildet ist, daß der Greifer (16) bei nicht-eingesetztem Einsatzteil zur Aufnahme von Werkzeughaltern mit größeren Ringflanschabmessungen ausgebildet ist, und daß das Einsatzteil (15) als Adapter an Werkzeughalter (10) mit kleineren Ringflanschabmessungen anlegbar und mit diesen in den Greifer (16) einsetzbar ist.

2. Werkzeugwechsler nach Anspruch 1, dadurch gekennzeichnet, daß das Einsatzteil (15) aus zwei im wesentlichen halbkreisförmigen Hälften (30, 31) besteht, die an einem Ende (32, 33) miteinander schwenkbar verbunden sind und am anderen Ende (34, 35) lösbare Verbindungsmittel aufweisen.

3. Werkzeugwechsler nach Anspruch 2, dadurch gekennzeichnet, daß die Verbindungsmittel als elastische Rastverbindung ausgebildet sind, bei der eine am einen Ende (34) einer der Hälften (30) angeordnete Rastnase (36) im verrasteten Zustand hinter einen an einem Ende (35) der anderen Hälfte (31) angeordneten Rastvorsprung (37) faßt.

4. Werkzeugwechsler nach Anspruch 3, dadurch gekennzeichnet, daß ein freies Ende (39) der Rastnase (36) im verrasteten Zustand mit seitlichem Abstand (40) zum Rastvorsprung (37) angeordnet ist.

**Claims**

1. A tool exchanger comprising a tool holder and a gripper, for a machine tool, wherein a multiplicity of standardized tool holders (10), in particular steep-angle tapered toolholders, can be unloaded from a tool magazine by means of grippers (16) and can be inserted into a spindle (12) of a spindlestock, the toolholder (10) being provided with an annular flange (13) having a downwardly narrowing external frusto-conical surface (20), and the gripper (16) having an annular element being provided with an upwardly widening internal frusto-conical surface (21), with these surfaces (20,21) frictionally adjoining each other under the action of the toolholder (10) weight during insertion of the toolholder (10) into the spindle (12) while these surfaces (20,21) are lifted-off from each other when the toolholder (10) is clamped in the spindle (12), characterized in that the annular element is designed as a loose insert (15), that the gripper(16), when the insert is not inserted therein, is designed for receiving toolholders having larger annular flange dimensions, and that the insert (15) can be affixed as an adapter to toolholders (10) having smaller annular flange dimensions for being inserted therewith into the gripper (16).

2. The tool exchanger of claim 1, characterized in that the insert (15) consists of two essentially semi-circular halves (30,31) being swivellably connected to each other at one of their terminals (32,33) and having releasable connectors at their other terminals (34,35).

3. The tool exchanger of claim 2, characterized in that the connectors are designed as elastic clip connectors where, in a locked condition, a locking nose (36) arranged at one terminal (34) of one of the halves (30) is gripping past a locking protrusion (37) arranged at a terminal (35) of the other half (31).

4. The tool exchanger of claim 3, characterized in that in the locked condition a free end (39) of the locking nose (36) is arranged at a lateral distance (40) from the locking protrusion (37).

**Revendications**

1. Dispositif de changement d'outil doté d'un porte-outil et d'une pince de préhension pour une machine-outil, dans lequel une majorité de porte-outils normalisés (10), en particulier des porte-outils à cône rapide, peuvent être prélevés d'un magasin d'outils par des pinces de préhension (16) pour être insérés dans une broche (12) d'une poupée, le porte-outil (10) présentant une collerette (13) avec une surface conique externe (20) se rétrécissant vers le bas et la pince de préhension (16) étant dotée d'une pièce annulaire présentant une surface conique interne (21) s'évasant vers le haut, les surfaces (20,21) étant assemblées par friction sous le poids propre du porte-outil (10) lors de l'introduction du porte-outil (10) dans la broche (12), tandis que lorsque le porte-outil (10) est à l'état rentré dans la broche (12), les surfaces (20,21) sont décollées l'une de l'autre, caractérisé en ce que la pièce annulaire est un insert amovible (15), en ce que la pince de préhension (16), lorsque l'insert n'est pas installé, est adaptée pour saisir des porte-outils dotés de collerettes relativement grandes, et en ce que l'insert (15) peut être placé en tant qu'adaptateur sur des porte-outils (10) dotés de collerettes relativement petites et être saisi avec ceux-ci dans la pince de préhension (16).

2. Dispositif de changement d'outil selon la revendication 1, caractérisé en ce que l'insert (15) se compose de deux moitiés essentiellement semi-circulaires (30,31), reliées et articulées à une extrémité (32,33) et présentant à l'autre extrémité (34,35) des moyens de liaison détachables.

3. Dispositif de changement d'outil selon la revendication 2, caractérisé en ce que les moyens de liaison sont des dispositifs élastiques à encliquetage, dans lesquels un doigt d'encliquetage (36), situé à une extrémité (34) d'une des moitiés (30), vient se bloquer à l'état enclenché derrière un épaulement d'encliquetage (37) situé à une extrémité (35) de l'autre moitié (31).

4. Dispositif de changement d'outil selon la revendication 3, caractérisé en ce qu'à l'état enclenché, une extrémité libre (39) du doigt d'encliquetage (36) est espacée latéralement de l'épaulement d'encliquetage (37) d'une distance (40).

Fig.1

# Fig. 2